# EUROPEAN PATENT APPLICATION

(11) **EP 4 471 475 A1**
(43) Date of publication of application: **04.12.2024**
(21) Application number: 23176483.8
(22) Date of filing: 31.05.2023
(51) Int. Cl.: G02B 6/44

(54) **DC POWER CABLE SYSTEM COMPRISING A REPEATER**

(71) Applicant: NKT HV Cables AB, 371 60 Lyckeby (SE)
(72) Inventor: GUSTAFSSON, Kristian, Karlskrona (SE); WORZYK, Thomas, Lyckeby (SE)
(74) Representative: Kransell & Wennborg KB

(57) **Abstract**

A DC power cable system comprising: a power cable (1) comprising a conductor (14), an insulation system (16) surrounding the conductor (14), an optical fiber cable (10) extending along the power cable (1), a power supply lead (12) extending along the power cable (1); and a repeater (20) powered by the power supply lead (12) and connected to the optical fiber cable (10), wherein the repeater (20) is arranged to amplify an optical signal propagating in the optical fiber cable (10).

## Description

### TECHNICAL FIELD

The present disclosure relates generally to a DC power cable system, and in particular to a DC power cable system comprising an optical fiber cable.

### BACKGROUND

Power cables are used to transport electricity over long distances on land but also on the ocean floor.

In many applications, it is desirable to be able to transmit data along the power cable, which therefore may comprise one or more optical fiber cables. However, in case a power cable extends over a long distance, the signal transmitted in the optical fiber cable experiences attenuation, which sets a length limit on the optical fiber cable and thus on the power cable.

It is therefore an object of the present disclosure to provide a DC power cable with an optical fiber cable, which can be laid over a longer distance.

### SUMMARY

To be able to transmit data in optical fiber cables over long distances, electrically powered repeaters may be used to amplify an optical signal propagating in the optical fiber cable and thus extend the reach of the optical signal. For AC power cables, which in contrast to DC power cables generate varying magnetic fields, electronic equipment in the cable may be powered by harvesting the magnetic fields by e.g., coils. However, as this solution is not applicable in DC power cables systems, aspects of the present disclosure aim at providing a DC power cable system that solves or at least mitigates the problems of the prior art.

There is hence according to a first aspect of the present disclosure provided a DC power cable system comprising: a power cable comprising a conductor, an insulation system surrounding the conductor, an optical fiber cable extending along the power cable, a power supply lead extending along the power cable; and a repeater powered by the power supply lead and connected to the optical fiber cable, wherein the repeater is arranged to amplify an optical signal propagating in the optical fiber cable.

By including a power supply lead in the power cable to power the repeater the optical signal may be transmitted over long distances in a DC power cable system.

According to one embodiment, the optical fiber cable comprises two optical fiber cable sections, and wherein a first of the optical fiber cable sections is connected to a second of the optical fiber cable sections via the repeater, and wherein the repeater is configured to amplify the optical signal received from the first optical fiber cable section and to transmit the amplified optical signal to the second optical fiber cable section.

In particular, a DC power cable extending over a long distance may include a plurality of optical fiber cable sections, wherein each section is connected to a different optical fiber cable section via a repeater. In one embodiment, there may be several repeaters arranged with a separation of approximately 200 km or less along the extension of the power cable.

According to one embodiment, the power cable comprises a joint and two power cable sections connected to each other by the joint.

According to one embodiment, the repeater is arranged in the joint.

Since outer layers such as any armor layer are removed in the jointing process, the optical fiber cables may also be easily accessed and connected to a repeater in the same jointing process.

According to one embodiment, the DC power cable system comprises an armor layer arranged around the insulation system, and the power supply lead is arranged in the armor layer.

The power supply lead may in the circumferential direction of the power cable be arranged between two armor wires of the armor layer. The power supply lead may have an outer diameter equal to or smaller than the diameter of the armoring wires.

According to one embodiment, the optical fiber cable is arranged in the armor layer.

The optical fiber cable may be housed in a tubular element with an outer diameter equal to or smaller than the diameter of the armoring wires. The optical fiber cable may in the circumferential direction of the power cable be arranged between two armoring wires of the armor layer.

According to one embodiment, the optical fiber cable is arranged in the conductor.

Common power cable arrangements are single-core and three-core arrangements. In the case of a three-core arrangement, the power cable may comprise filler profiles arranged between pairs of adjacent power cores, providing support and protection. The optical fiber cable may according to one example be arranged in one of the filler profiles.

According to one embodiment, the power cable is a high-voltage direct current (HVDC) or an ultrahigh-voltage direct-current (UHVDC) power cable.

According to one embodiment, the power supply lead is a low voltage power supply lead.

Due to this feature, the power supply lead may supply power to the repeater. Low voltage is herein a factor of at least 10 lower than the voltage rating of the power cable. For example, low voltage may mean 110, 115, 110, 220, 230, or 240 VAC.

According to one embodiment, the power cable is a submarine power cable.

Avoiding attenuation of the optical signal is especially desirable in submarine power cables since they may extend over very long distances with difficult access in harsh environments.

According to one embodiment, the optical fiber cable is arranged to transmit the optical signal amplified by the repeater in the submarine power cable to an onshore monitoring arrangement.

According to one embodiment, the power cable comprises a sensor, and the optical fiber cable is connected to the sensor and the optical signal includes sensor data.

By this feature, the power cable can be easily monitored.

According to one embodiment, the optical fiber cable is arranged to transmit telecommunication data.

By this feature, a power cable line may simultaneously provide electrical power and telecommunication.

According to one embodiment, the insulation system comprises an inner semiconducting layer, an insulation layer arranged around the inner semiconducting layer, and an outer semiconducting layer arranged around the insulation layer.

### BRIEF DESCRIPTION OF THE DRAWINGS

The specific embodiments of the inventive concept will now be described, by way of example, with reference to the accompanying drawings, in which:
figure 1 schematically shows a cross section of an example of a power cable; and
figure 2 schematically shows a longitudinal sectional view of a power cable comprising a joint according to an exemplifying embodiment.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art.

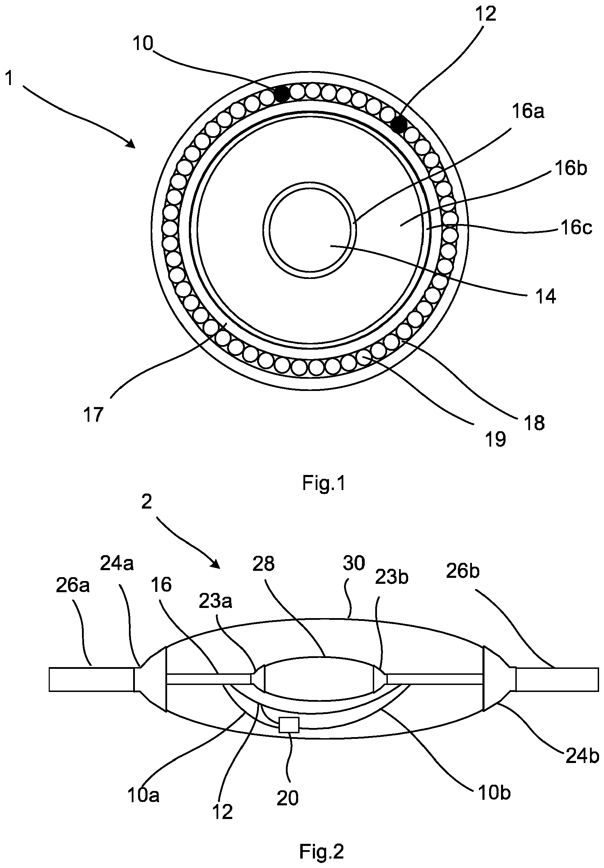

Fig. 1 schematically shows a cross section of an example of a power cable 1. The power cable 1 is a DC power cable. The power cable 1 may for example be an HVDC power cable with a voltage rating of 100 to 800 kV, or a UHVDC power cable with a voltage rating above 800 kV.

The power cable may be a static or a dynamic submarine power cable, or alternatively an underground power cable.

The power cable 1 forms part of a DC power cable system 2 including the power cable 1 and a repeater 20, shown in Fig. 2.

The power cable 1 comprises a conductor 14. The conductor 14 may for example be solid, stranded, profiled, or of Milliken type.

The power cable 1 may comprise an insulation system 16 surrounding the conductor 14. The insulation system 16 may comprise an inner semiconducting layer 16a, an insulation layer 16b arranged around the inner semiconducting layer 16a, and an outer semiconducting layer 16c arranged around the insulation layer 16b.

The inner semiconducting layer 16a may for example comprise crosslinked polyethylene (XLPE), polypropylene (PP), thermoplastic elastomer (TPE) which is based on PP random copolymer, ethylene propylene diene monomer (EPDM) rubber, or ethylene propylene rubber (EPR), mixed with a semiconductive component such as carbon black to form a semiconducting polymer, or a semiconducting paper. The insulation layer 16b may for example comprise XLPE, PP, thermoplastic elastomer (TPE) which is based on PP random copolymer, EPDM rubber, or EPR, or paper. The outer semiconducting layer 16c may for example comprise XLPE, PP, thermoplastic elastomer (TPE) which is based on PP random copolymer, EPDM rubber, or EPR, mixed with a semiconductive component such as carbon black to form a semiconducting polymer, or a semiconducting paper.

The power cable 1 may comprise an armor layer 18 arranged around the insulation system 16. The armor layer 18 may comprise a plurality of longitudinal armoring wires 19 extending helically along the power cable 1. The armor wires 19 may be made of metal such as galvanized carbon steel, austenitic stainless steel, copper, or aluminum, synthetic material such as jacketed aramid fibers.

In addition, the power cable 1 may comprise at least one layer, such as layer 17, between the armor layer 18 and the insulation system 16. The layer 17 may for example be a polymeric layer. There may be other layers too between the armor layer 18 and the insulation system 16, such as a radial water barrier layer and/or a bedding layer.

The power cable 1 comprises an optical fiber cable 10 extending along the power cable 1. The optical fiber cable 10 may for example be arranged in the armor layer 18 or if the power cable is a three-core power cable comprising filler profiles, the optical fiber cable 19 may be arranged in one of the filler profiles.

The optical fiber cable 10 comprises a plurality of optical fibers. The optical fiber cable 10 may comprise a tube containing the optical fibers. The optical fiber cable 10 may for example be a Fiber In Metallic Tube (FIMT). The optical fibers may be of single mode, multimode graded index, or multimode step-index type.

The power cable 1 comprises a power supply lead 12 extending along the power cable 1. The power supply lead 12 may for example be arranged in the armor layer 18 or in a filler profile.

The power supply lead 12 may be a low voltage power supply lead arranged to provide power to the repeater 20. The power supply lead 12 may have a dry, semi dry, or wet design.

The power supply lead 12 may be arranged to transmit single phase AC or DC electric power.

The power supply lead 12 may include a protective tube having one or more insulated electrical power wires arranged therein.

According to one example, the optical fiber cable 10 and the power supply lead 12 may be arranged as a composite cable, wherein the optical fibers and electrical power wires are disposed in the same tube.

Figure 2 schematically shows a longitudinal sectional view of the power cable 1 comprising a joint 2 according to an exemplifying embodiment. The power cable 1 comprises two power cable sections 26a, 26b, connected to each other by the joint 2. The joint 2 may for example be a rigid sea joint.

The joint 2 may comprise an outer rigid casing 30, which has openings 24a and 24b at a respective axial end. The joint 2 may have an inner casing 28, in which the electric joint between the two power cable sections 26a and 26b is located.

Each power cable section 26a, 26b enters through a respective opening 24a, 24b of the outer rigid casing 30. Inside the outer rigid casing 30, any armor layer 18 has been removed. The armoring wires 19 of the armor layer 18 are connected to the outer rigid casing 30, for example by welding or by clamping. Each power cable section 26a, 26b then enters through a respective opening 23a, 23b of the inner casing 28. The conductor 14 of the first power cable section 26a is jointed with the conductor 14 of the second power cable section 26b inside the inner casing 28.

The outer rigid casing 30 maybe filled with a material such as water or sand for added weight. The inner casing 28 is watertight.

The repeater 20 is powered by the power supply lead 12. The power supply lead 12 may be terminated at the repeater 20, or if the DC power cable system comprises more than one repeater 20, the power supply lead 12 may extend to another repeater.

The joint 2 may comprise the repeater 20. The repeater 20 may be housed inside the outer rigid casing 30, outside the inner casing 28, and the optical fiber cable 10 and the power supply lead 12 may be connected to the repeater 20 inside the outer rigid casing 30.

The optical fiber cable 10 may comprise two optical fiber cable sections 10a, 10b. The first optical fiber cable section 10a extends along the first power cable section 26a, and the second optical fiber cable section 10b extends along the second power cable section 26b.

The first optical fiber cable section 10a may be connected to the second optical fiber cable section 10b via the repeater 20. The repeater 20 is configured to amplify an optical signal received from the first optical fiber cable section 10a and to transmit the amplified optical signal to the second optical fiber cable section 10b.

The power supply lead 12 may be connected to a plurality of repeaters 20 arranged at different locations along the DC power cable system 2.

The DC power cable system 2 may comprise a power converter (not shown) configured to convert the power transmitted through the power supply lead 12 to adapt the voltage/current level and/or converting AC power to DC power to that required by the repeater 20. The power converter may be integrated with the repeater 20, or it may be a separate entity.

The DC power cable system may comprise a plurality of joints 2. At least some of the joints comprises a respective repeater 20.

The power cable 1 may further comprise a sensor (not shown). The sensor may be arranged to measure parameters such as temperature and/or pressure. The sensor may for example be arranged in the joint 2.

The optical fiber cable 10 may be connected to the sensor and the optical signal may include sensor data. The power cable 1 may comprise a converter configured to convert the measurements by the sensor to an optical signal to be transmitted by the optical fiber cable 10.

Alternatively, the optical fiber cable 10 itself may be used as a sensing element, in which case laser pulses are emitted into the optical fiber cable 10 and the resulting back-scattered light is monitored for any potential changes, e.g., to measure the strain on the power cable 1.

The optical fiber cable 10 may according to one example be arranged to transmit telecommunication data.

The final length of optical fiber cable 10 may be arranged to transmit the optical signal amplified by the final repeater 20 in an axial direction along the length of the power cable 1 to a monitoring system and/or to a communications network (not shown).

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A DC power cable system comprising:
a power cable (1) comprising
a conductor (14),
an insulation system (16) surrounding the conductor (14),
an optical fiber cable (10) extending along the power cable (1),
a power supply lead (12) extending along the power cable (1); and
a repeater (20) powered by the power supply lead (12) and connected to the optical fiber cable (10), wherein the repeater (20) is arranged to amplify an optical signal propagating in the optical fiber cable (10).

2. DC power cable system according to claim 1, wherein the optical fiber cable (10) comprises two optical fiber cable sections (10a, 10b), and wherein a first of the optical fiber cable sections (10a) is connected to a second of the optical fiber cable sections (10b) via the repeater (20), and wherein the repeater (20) is configured to amplify the optical signal received from the first optical fiber cable section (10a) and to transmit the amplified optical signal to the second optical fiber cable section (10b).

3. DC power cable system according to any one of the preceding claims, wherein the power cable (1) comprises a joint (2) and two power cable sections (26a, 26b) connected to each other by the joint (2).

4. The DC power cable system according to claim 3, wherein the repeater (20) is arranged in the joint (2).

5. The DC power cable system according to any one of the preceding claims, wherein the DC power cable system comprises an armor layer (18) arranged around the insulation system (16), and the power supply lead (12) is arranged in the armor layer (18).

6. The DC power cable system according to claim 5, wherein the optical fiber cable (10) is arranged in the armor layer (18).

7. The DC power cable system according to any one of claims 1 to 5, wherein the optical fiber cable (10) is arranged in the conductor (14).

8. The DC power cable system according to any one of the preceding claims, wherein the power cable (1) is an HVDC or UHVDC power cable.

9. The DC power cable system according to any one of the preceding claims, wherein the power supply lead (12) is a low voltage power supply lead (12).

10. The DC power cable system according to any one of the preceding claims, wherein the power cable (1) is a submarine power cable (1).

11. The DC power cable system according to claim 10, wherein the optical fiber cable (10) is arranged to transmit the optical signal amplified by the repeater (20) in the submarine power cable (1) to an onshore monitoring arrangement.

12. The DC power cable system according to any one of the preceding claims, wherein the power cable (1) comprises a sensor, wherein the optical fiber cable (10) is connected to the sensor and the optical signal includes sensor data.

13. The DC power cable system according to claims 1 to 10, wherein the optical fiber cable (10) is arranged to transmit telecommunication data.

14. The DC power cable system according to any one of the preceding claims, wherein the insulation system (16) comprises an inner semiconducting layer (16a), an insulation layer (16b) arranged around the inner semiconducting layer (16a), and an outer semiconducting layer (16c) arranged around the insulation layer (16b).
